Europäisches Patentamt

European Patent Office

Office européen des brevets

(19)

(11) **EP 0 999 449 A1**

(12) **EUROPÄISCHE PATENTANMELDUNG**

(43) Veröffentlichungstag:
   **10.05.2000  Patentblatt 2000/19**

(51) Int Cl.$^7$: **G01P 21/00**

(21) Anmeldenummer: **99121231.7**

(22) Anmeldetag: **23.10.1999**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **07.11.1998  DE 19851409**

(71) Anmelder: **Deutsches Zentrum für Luft- und
   Raumfahrt e.V.
   53175 Bonn (DE)**

(72) Erfinder: **Hamacher, Hans, Prof.Dr.-Ing.
   51503 Rösrath (DE)**

(74) Vertreter: **Selting, Günther, Dipl.-Ing. et al
   Patentanwälte
   von Kreisler, Selting, Werner
   Postfach 10 22 41
   50462 Köln (DE)**

(54) **Verfahren zur Bestimmung des Nullpunktfehlers eines Akzelerometers**

(57) Zur Bestimmung des Nullpunktfehlers eines feststehenden Akzelerometers ($A_f$) ist an demselben Halter ein klappbares Akzelerometer ($A_k$) angebracht, welches in gleicher Ausrichtung wie das feststehende Akzelerometer betrieben werden kann, jedoch auch in 180° entgegengesetzter Ausrichtung. In einer ersten Meßphase in der beide Akzelerometer in gleicher Ausrichtung orientiert sind, werden die Anzeigemittelwerte beider Akzelerometer ermittelt. Anschließend werden in einer zweiten Meßphase, in der das zweite Akzelerometer gegenüber dem ersten um 180° geklappt ist, ebenfalls die Anzeigemittelwerte beider Akzelerometer ermittelt. Aus den insgesamt vier Anzeigemittelwerten wird der Nullpunktfehler ($f_{of}$) des feststehenden Akzelerometers ($A_f$) errechnet.

FIG.1

**Beschreibung**

Die Erfindung betrifft ein Verfahren zur Bestimmung des Nullpunktfehlers eines ersten Akzelerometers sowie ein absolutmessendes Akzelerometersystem.

In der Raumfahrttechnik, z.B. in Weltraumlabors, müssen Messungen absoluter Beschleunigung mit extrem hoher Genauigkeit durchgeführt werden. Hierzu wurde ein Akzelerometersystem mit einem klappbaren Akzelerometer entwickelt, das um 180° geklappt werden kann, um Beschleunigungsmessungen mit zwei entgegengesetzten Orientierungen vorzunehmen. Ein solches Instrument ist in dem QSAM-System des deutschen Zentrums für Luft- und Raumfahrt e.V. enthalten (Quasi-Steady Acceleration Measurement System). Eine äußerst aufwendige andere Entwicklung der NASA ist das OARE (Orbit Acceleration Research Experiment). Beide Systeme sind von ihrer Konzeption her nicht vollkommen geeignet, den Einfluß von Störungen, die z.B. durch Stöße von Astronauten und Triebwerksimpulsen entstehen, bei der Nullpunktbestimmung zu eliminieren. Beim QSAM-System wird noch zusätzlich die Lock-In-Technik angewendet, wodurch alle störenden Frequenzanteile, die von der Klappfrequenz verschieden sind, eliminiert werden. Raumfahrzeuge und die meisten anderen technischen Schwingungssysteme weisen aber dicht besetzte Spektren auf, die Anteile auch in der Klappfrequenz enthalten, welche vom Prinzip her nicht herausgefiltert werden können. Ursachen sind meistens stoßartige Impulse mit weißem Spektrum.

Die absolute Messung von Beschleunigungen erfordert die Korrektur des Nullpunkt-Fehlers des verwendeten Akzelerometers. Dies ist vor allem für die hochgenaue Messung sehr niedriger Beschleunigungen (unterhalb $10^{-6}$ g;g = 9,81 m/s$^2$), wie sie in Weltraumlabors gefordert ist, aus folgenden Gründen schwierig:

1. Akzelerometer messen neben der Bewegungsbeschleunigung (zweite Ableitung des Weges s nach der Zeit t, $d^2s/dt^2$) stets auch die lokale Gravitationsbeschleunigung. Diese ist immer vorhanden und kann nicht, wie z.B. bei der Messung der meisten anderen physikalischen Größen (elektrischer Strom, etc.) zum Zwecke der Nullpunktfestlegung abgeschaltet oder abgeschirmt werden.

2. Vibrationen, die während der Nullpunktfestlegung ebenfalls stören, treten immer auf und können nie vollkommen vermieden werden.

Der Erfindung liegt die Aufgabe zugrunde, ein Verfahren und ein Akzelerometersystem anzugeben, mit dem die Feststellung und Kompensation des Nullpunktfehlers eines Akzelerometers erfolgen kann, um Störungen jeglicher Art zu eliminieren.

Die Lösung dieser Aufgabe erfolgt bei dem Verfahren mit den Merkmalen des Patentanspruchs 1 und bei der Vorrichtung mit den Merkmalen des Patentanspruchs 2.

Eine Besonderheit der Erfindung ist die Verwendung von zwei Akzelerometern, nämlich einem feststehenden und einem periodisch oder sporadisch um 180° klappenden Akzelerometer. Das klappbare Akzelerometer dient zur Ermittlung des Nullpunktfehlers. Beide Akzelerometer müssen dicht zusammen liegen und hart mit der mechanischen Struktur, an der die Beschleunigung gemessen werden soll, gekoppelt sein, so daß beide das gleiche Beschleunigungssignal registrieren. Die Meßketten beider Akzelerometer müssen ebenfalls gleich sein. In einer ersten Meßphase, in der das zweite Akzelerometer in gleicher Ausrichtung orientiert ist wie das erste, werden die Anzeigemittelwerte jedes Akzelerometers ermittelt. Anschließend wird eine zweite Meßphase durchgeführt, in der das zweite Akzelerometer gegenüber dem ersten um 180° geklappt ist. In der zweiten Meßphase werden ebenfalls die Anzeigewerte jedes Akzelerometers ermittelt. Anschließend wird aus den insgesamt vier Anzeigewerten der Nullpunktfehler des feststehenden Akzelerometers berechnet. Das klappbare Akzelerometer dient also als Hilfsmittel für die Ermittlung des Nullpunktfehlers des feststehenden Akzelerometers.

Die Ablesung bzw. Anzeige des feststehenden Akzelerometers ergibt nach Subtraktion seines momentanen Nullpunktfehlers $f_{0f}$ den Wert der absoluten Beschleunigung. Der momentane Nullpunktfehler kann langfristig aufgrund verschiedener Effekte schwanken, vor allem durch Temperaturänderungen, aber auch durch Stöße und durch Alterungs- und Setzerscheinungen. Dies ist der Grund dafür, daß ein Akzelerometer für ein Weltraumlabor nicht zuvor am Boden geeicht werden kann. Auch die Vibrationen während des Aufstiegs würden eine solche Eichung rückgängig machen. Die erfindungsgemäße Nullpunktkorrektur kann dagegen jederzeit wiederholt werden, was vor allem bei sehr geringen Beschleunigungsniveaus notwendig ist.

Im folgenden wird unter Bezugnahme auf die Zeichnungen ein Ausführungsbeispiel der Erfindung näher erläutert.

Es zeigen:

Fig. 1 einen schematischen Querschnitt des Akzelerometersystems,

Fig. 2 eine graphische Darstellung des zeitlichen Verlaufs der Instrumentanzeige des festen Akzelerometers, und

Fig. 3 eine Darstellung des zeitlichen Verlaufs der Instrumentanzeige des klappbaren Sensors.

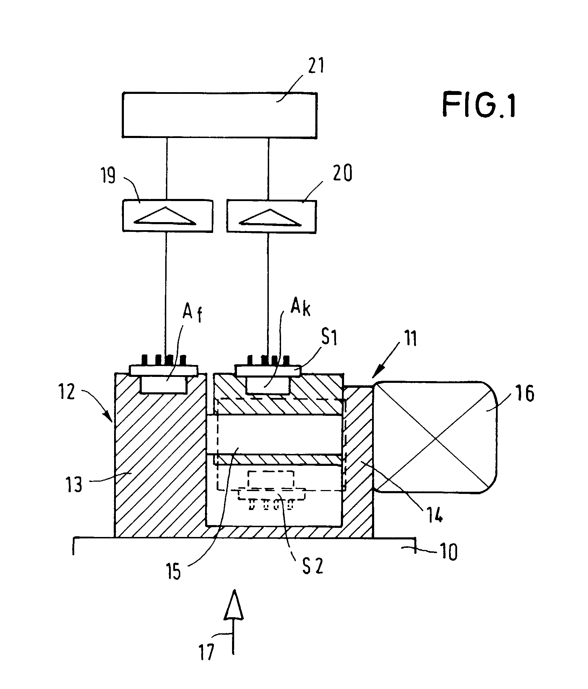

Gemäß Figur 1 ist an einer schwingenden Struktur 10, deren Beschleunigung gemessen werden soll, das Akzelerometersystem 11 starr montiert. Das Akzelerometersystem weist einen U-förmigen Tragkörper 12 auf, der an der Struktur 10 befestigt wird. Der eine Schenkel 13 des Tragkörpers 12 trägt ein feststehendes Akzelerometer $A_f$. Zwischen den beiden Schenkeln 13 und 14 erstreckt sich eine Achse 15, an der ein klappbares Akzelerometer $A_k$ angebracht ist. Die Achse 15 wird von einem Elektromotor 16, vorzugsweise einem Schrittmotor, um jeweils 180° gedreht, wobei das Akzelerometer $A_k$ eine erste Stellung einnehmen kann, in der seine Meßrichtung gleich derjenigen des feststehenden Akzelerometers $A_f$ ist, und eine zweite Stellung, in der seine Meßrichtung um 180° entgegengesetzt ist. In Figur 1 ist die erste Stellung mit S1 und die zweite Stellung mit S2 bezeichnet. In der zweiten Stellung S2 ist die Meßrichtung derjenigen des festen Akzelerometers $A_f$ entgegengesetzt.

Die beiden Akzelerometer weisen im allgemeinen unterschiedliche Nullpunktfehler auf, die während einer Klappzeit T (in der Größenordnung von z.B. 10 Sekunden) mit hinreichender Genauigkeit als konstant angesehen werden können. Dabei ist

$f_{0f}$ der Nullpunktfehler des festen Akzelerometers $A_f$
$f_{0k}$ der Nullpunktfehler des klappenden Akzelerometers.

Die Akzelerometer sind jeweils über eine Meßkette 19,20 aus Verstärkerfilter o.dgl. mit einem Meßgerät 21 verbunden, das die Signale der Akzelerometer in der nachfolgend beschriebenen Weise verarbeitet.

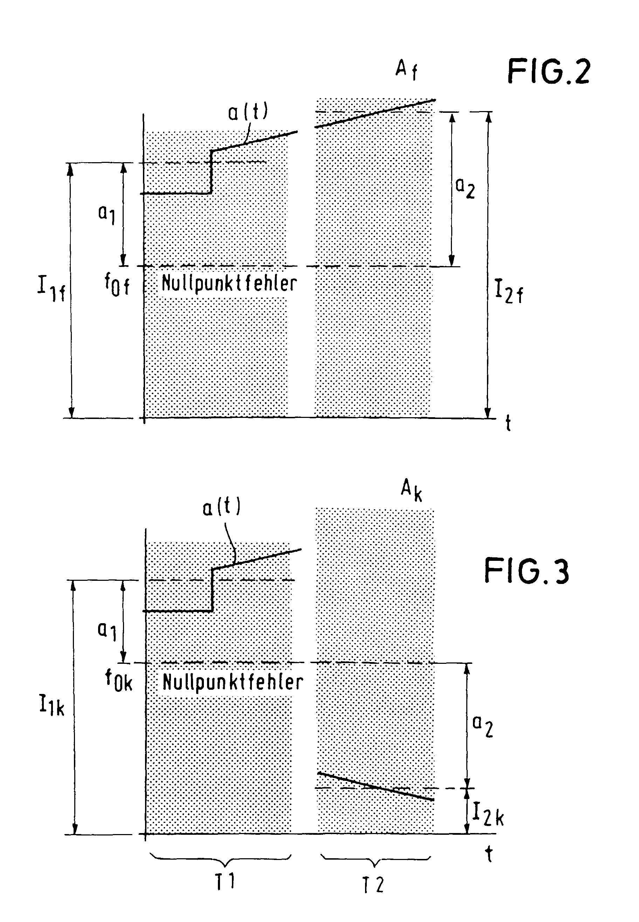

In Figur 2 und Figur 3 ist ein beliebiger Beschleunigungsverlauf a (t) dargestellt, der während der ersten Meßphase T1 den Mittelwert $a_1$ hat und während der zweiten Meßphase T2 den Mittelwert $a_2$. Durch die Richtungsumkehr zwischen den beiden Meßphasen ändert sich für das klappende Akzelerometer $A_k$ das Vorzeichen der Beschleunigung (aus + $a_2$ wird - $a_2$), während der Nullpunktfehler $f_{Ok}$ nach Größe und Vorzeichen unverändert bleibt. Die beiden Akzelerometer ergeben folgende Anzeigemittelwerte (zeitliche Mittelwerte der Ablesung innerhalb einer Phase) :

$I_{1f}$, $I_{2f}$     Ablesemittelwerte des festehenden Akzelerometers in Phase T1 bzw. T2

$I_{1k}$, $I_{2k}$     Ablesemittelwerte des klappenden Akzelerometers in Phase T1 bzw. T2.

Diese vier Ablesemittelwerte werden in einer Einrichtung zum Registrieren der Anzeigemittelwerte gespeichert und anschließend erfolgt in einer Einrichtung zur Berechnung des Nullpunkt fehlers $f_{0f}$ des festen Akzelerometers die Berechnung aus den Anzeigemittelwerten beider Akzelerometer.

Der Nullpunktfehler des festen Akzelerometers ist

$$f_{0f} = 0,5 \left[I_{1f} + I_{2f} - (I_{1k} - I_{2k})\right].$$

Die Ablesung des festehenden Akzelerometers $A_f$ ergibt nach Subtraktion seines momentanen Nullpunktfehlers $f_{0f}$ den Wert der absoluten Beschleunigung. Auf diese Weise erfolgt eine Eichung des festehenden Akzelerometers, die in bestimmten Zeitabständen oder nach Auftreten bestimmter Ereignisse wiederholt werden kann.

**Patentansprüche**

1. Verfahren zur Bestimmung des Nullpunktfehlers eines ersten Akzelerometers ($A_f$) mit folgenden Schritten:

   - Vorsehen eines zweiten Akzelerometers ($A_k$),

   - Ermitteln der Anzeigemittelwerte $I_{1f}$,$I_{1k}$ des ersten und des zweiten Akzelerometers in einer ersten Meßphase (T1), in der das zweite Akzelerometer in gleicher Ausrichtung orientiert ist wie das erste,

   - Ermitteln der Anzeigewerte $I_{2f}$,$I_{2k}$ des ersten und des zweiten Akzelerometers in einer zweiten Meßphase (T2), in der das zweite Akzelerometer gegenüber dem ersten um 180° geklappt ist,

   - Ermitteln des Nullpunkt fehlers $f_{0f}$ des ersten Akzelerometers anhand der Formell

   $$f_{0f} = 0,5 \left[I_{1f} + I_{2f} - (I_{1k} - I_{2k})\right].$$

2. Absolutmessendes Akzelerometersystem mit einem feststehenden Akzelerometer ($A_f$) und einem in gleicher Ausrichtung montierten, um 180° klappbaren Akzelerometer ($A_k$), einer Einrichtung zum Registrieren der Anzeigemittelwerte $I_{2f}$,$I_{1k}$ des festen und des klappbaren Akzelerometers in einer ersten Meßphase (T1), einer Einrichtung zum Registrieren der Anzeigemittelwerte $I_{1f}$,$I_{2k}$ des festen und des klappbaren Akzelerometers in einer zweiten Meßphase (T2) und einer Einrichtung zur Berechnung des Nullpunktfehlers ($f_{0f}$) des festen Akzelerometers aus den Anzeigemittelwerten beider Akzelerometer während der ersten Meßphase und während der zweiten Meßphase.

FIG.1

21

19    20

Af    Ak    S1    11

12    16

13    14

15    S2    10

17

FIG.2

FIG.3

**Europäisches Patentamt**

# EUROPÄISCHER RECHERCHENBERICHT

Nummer der Anmeldung

EP 99 12 1231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 557 592 A (TELDIX GMBH) 1. September 1993 (1993-09-01) * Seite 4, Zeile 39 – Seite 6, Zeile 10 * | 1,2 | G01P21/00 |
| A | EP 0 406 677 A (DEUTSCHE FORSCH LUFT RAUMFAHRT) 9. Januar 1991 (1991-01-09) * Zusammenfassung; Ansprüche 1,4,17 * | 1,2 | |
| A | DE 41 08 081 A (BOSCH GMBH ROBERT) 17. September 1992 (1992-09-17) * Zusammenfassung * | 1,2 | |
| A | DE 44 04 265 A (SIEMENS AG) 17. August 1995 (1995-08-17) * Zusammenfassung * | 1,2 | |
| | | | RECHERCHIERTE SACHGEBIETE (Int.Cl.7) |
| | | | G01P |

Der vorliegende Recherchenbericht wurde für alle Patentansprüche erstellt

| Recherchenort | Abschlußdatum der Recherche | Prüfer |
|---|---|---|
| MÜNCHEN | 10. Februar 2000 | Felicetti, C |

**ANHANG ZUM EUROPÄISCHEN RECHERCHENBERICHT**
**ÜBER DIE EUROPÄISCHE PATENTANMELDUNG NR.**

EP 99 12 1231

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 0557592 | A | 01-09-1993 | DE | 4205868 A | 02-09-1993 |
| | | | DE | 59208040 D | 27-03-1997 |
| EP 0406677 | A | 09-01-1991 | DE | 3921560 A | 10-01-1991 |
| | | | JP | 3044561 A | 26-02-1991 |
| DE 4108081 | A | 17-09-1992 | KEINE | | |
| DE 4404265 | A | 17-08-1995 | WO | 9522063 A | 17-08-1995 |
| | | | EP | 0744031 A | 27-11-1996 |
| | | | JP | 2780064 B | 23-07-1998 |
| | | | JP | 9503306 T | 31-03-1997 |
| | | | NO | 963343 A | 12-08-1996 |

EPO FORM P0461

Für nähere Einzelheiten zu diesem Anhang : siehe Amtsblatt des Europäischen Patentamts, Nr.12/82